# EUROPÄISCHE PATENTSCHRIFT

(11) **EP 1 288 559 B1**
(45) Veröffentlichungstag und Bekanntmachung des Hinweises auf die Patenterteilung: **05.09.2007**
(21) Anmeldenummer: 02015447.2
(22) Anmeldetag: 11.07.2002
(51) Int. Cl.: F16P 3/14

(54) **Optoelektronische Überwachungseinrichtung**
Optoelectronic monitoring device
Dispositif de surveillance optoélectronique

(30) Priorität: 30.08.2001 DE 10142362
(43) Veröffentlichungstag der Anmeldung: 05.03.2003
(73) Patentinhaber: SICK AG, 79183 Waldkirch (DE)
(72) Erfinder: Henkel, Olaf, 79276 Reute (DE); Wüstefeld, Martin, 79350 Sexau (DE)
(74) Vertreter: Manitz, Finsterwald & Partner GbR

(56) Entgegenhaltungen:
- EP-A- 0 897 123
- DE-A- 19 544 632
- DE-A- 19 938 639
- DE-B- 1 170 286
- US-A- 2 241 556
- US-A- 4 742 337

## Beschreibung

Die Erfindung betrifft eine optoelektronische Überwachungseinrichtung mit wenigstens einem an einem Ende eines Überwachungsbereichs angeordneten Sender, zumindest einem an einem dem Sender gegenüberliegenden Ende des Überwachungsbereichs angeordneten Reflektor für von dem Sender ausgesandte elektromagnetische Strahlung sowie zumindest einem Empfänger für von dem Reflektor reflektierte Strahlung. Die Erfindung betrifft außerdem ein Verfahren zum Nachweisen von in einen Überwachungsbereich eindringenden Objekten.

Derartige Überwachungseinrichtungen und Nachweisverfahren sind grundsätzlich bekannt und dienen dazu, in den Überwachungsbereich eindringende Objekte nachzuweisen. Der Einsatz derartiger Überwachungseinrichtungen erfolgt beispielsweise an gefährlichen Maschinen oder sicherheitsrelevanten Einrichtungen, an denen das Eindringen von Gegenständen oder Personen bzw. einzelner Körperteile in den Überwachungsbereich, der auch als Schutzbereich bezeichnet wird, verhindert werden soll. Die Überwachungseinrichtung sorgt auf diese Weise für die Sicherheit der an der Maschine arbeitenden Personen oder für die Sicherheit des überwachten bzw. geschützten Bereiches.

Die DE 199 38 639 A1 beschreibt eine Vorrichtung zur Absicherung eines Gefahrenbereichs, die eine Bildaufnahmeeinheit sowie ein definiertes Ziel aufweist, dessen Abbild die Bildaufnahmeeinheit aufnimmt und mit einem Referenzbild, im einfachsten Fall dem ungestörten Abbild des definierten Ziels, vergleicht.

Aufgabe der Erfindung ist es, eine optoelektronische Überwachungseinrichtung der eingangs genannten Art zu schaffen, die bei zuverlässiger Funktionsweise möglichst manipulationssicher und unempfindlich gegenüber externer Störstrahlung ist, und die insbesondere kostengünstig sein und den Nachweis von Objekten im Überwachungsbereich mit einer hohen Auflösung gestatten soll. Außerdem soll ein verbessertes Nachweisverfahren geschaffen werden.

Die Lösung dieser Aufgabe erfolgt zum einen durch die Merkmale des Anspruchs 1.

Erfindungsgemäß bilden die Sendeelemente des Senders und das Empfangselement des Empfängers eine aktive Seite und der Reflektor am den Sendeelementen gegenüberliegenden Ende des Überwachungsbereiches eine passive Seite der Überwachungseinrichtung. Wenn die von zumindest einem Sendeelement ausgesandte Strahlung z.B. durch ein in den Überwachungsbereich eindringendes Objekt unterbrochen wird, dann wird diese Verletzung des Überwachungs- oder Schutzbereiches dadurch erkannt, daß mittels der Auswerteeinrichtung eine Abweichung des auf dem Empfangselement nachgewiesenen Musters von dem erwarteten Abbild der Sendeelemente auftritt. Dabei ist die Auflösung der Überwachungseinrichtung, d.h. die Nachweisgrenze, durch den Abstand der Sendeelemente untereinander bestimmt. Durch die Wahl eines entsprechend geringen Abstands zwischen den bevorzugt in einer Ebene liegende Strahlungsquellen bildenden Sendeelementen kann die Auflösung der Einrichtung prinzipiell beliebig gesteigert werden.

Erfindungsgemäß wird für die Gruppe von Sendeelementen lediglich ein einziges Empfangselement benötigt, d.h. es ist nicht erforderlich, jedem Sendeelement einen Empfänger zuzuordnen. Hierdurch wird eine besonders kostengünstige Aktiv-/Passiv-Bauweise realisiert. Alternativ können erfindungsgemäß auch mehrere Empfangselemente vorgesehen sein.

Ein weiterer Vorteil der erfindungsgemäßen Überwachungseinrichtung besteht darin, daß ein eventuelles Versetzen des passiven Teils, d.h. des Reflektors, relativ zum aktiven Teil erkannt wird, da das auf dem Empfangselement nachgewiesene Muster der Gruppe von Sendeelementen bei einer nicht bestimmungsgemäßen Relativanordnung zwischen Sender, Reflektor und Empfänger von dem erwarteten Abbild der Gruppe von Sendeelementen abweicht. Die erfindungsgemäße Überwachungseinrichtung weist hierdurch eine hohe Manipulationssicherheit auf. Auch eine zu Manipulationszwecken vorgenommene Umspiegelung der von den Sendeelementen ausgesandten Strahlung z.B. durch Einbringen zusätzlicher Strahlumlenkmittel in den Strahlengang, führt zu einer Ortsverschiebung der abgebildeten Sendeelemente auf dem Empfangselement, was durch den Vergleich des tatsächlich nachgewiesenen Musters der Sendeelemente mit dem erwarteten Muster erkannt wird.

Ferner erfolgt in vorteilhafter Weise die Abbildung der Sendeelemente erfindungsgemäß derart, daß nicht von den Sendeelementen stammende Störstrahlung nicht in den Bereichen des Empfangselements auftreffen kann, in denen die von den Sendeelementen ausgesandte und von dem Reflektor reflektierte Strahlung nachgewiesen wird. Die erfindungsgemäße Überwachungseinrichtung weist hierdurch eine hohe Störstrahlungssicherheit auf.

Als Sendeelemente im Sinne der Erfindung sind nicht zwangsläufig jeweils separate Baueinheiten zu verstehen, sondern es kann sich bei den Sendeelementen um auf grundsätzlich beliebige Art und Weise realisierte Strahlungsquellen handeln. Die Wellenlänge der verwendeten Strahlung ist erfindungsgemäß prinzipiell beliebig und kann sowohl im für das menschliche Auge sichtbaren als auch unsichtbaren Bereich liegen.

Die strahlungsempfindliche Fläche des Empfangselements ist vorzugsweise kleiner und insbesondere wesentlich kleiner als die Fläche, über welche die Sendeelemente verteilt sind. Die Abbildung zumindest eines Teils der Sendeelemente wird bevorzugt durch eine an die jeweiligen Gegebenheiten angepaßte Abbildungsoptik des Empfängers, die dem Empfangselement vorgelagert ist, erzielt, wobei die Abbildungs- oder Empfangsoptik bevorzugt ein Mehrlinsensystem aufweist.

In einer bevorzugten praktischen Ausgestaltung der Erfindung ist vorgesehen, daß der Empfänger im Bereich des Senders und bevorzugt in unmittelbarer Nähe zum Sender angeordnet ist. Besonders bevorzugt ist es, wenn der Empfänger und der Sender zu einem Modul zusammengefaßt sind. Hierdurch wird eine vorteilhafte Modulbauweise ermöglicht, bei der mehrere jeweils wenigstens einen Sender und zumindest einen Empfänger umfassende Module zu einer Sende-/Empfangseinheit zusammengefaßt werden können. Bei einem derartigen modularen System ergeben sich in vorteilhafter Weise geringe Anforderungen an die Anzahl von Sendeelementen pro Modul, die für eine entsprechend dem jeweiligen Anwendungszweck ausreichende Überwachungssicherheit erforderlich ist, sowie an die Öffnungswinkel der Module.

Gemäß einer weiteren bevorzugten Ausführungsform der Erfindung ist eine einreihige Anordnung von Sendeelementen vorgesehen. Durch diese eindimensionale Anordnung der Gruppe von Sendeelementen läßt sich eine für bestimmte Anwendungen vorteilhafte schmale Bauform der aktiven Seite der Überwachungseinrichtung erzielen. Vorzugsweise ist der Empfänger bzw. dessen Empfangselement auf einer Linie mit der Reihe von Sendeelementen angeordnet, kann jedoch auch seitlich der Sendeelemente positioniert sein.

Eine zweidimensionale Anordnung der Sendeelemente und damit ein dreidimensionaler Überwachungsbereich wird gemäß einer weiteren bevorzugten Ausführungsform der Erfindung dadurch erzielt, daß eine mehrreihige Anordnung der Sendeelemente vorgesehen ist. Bevorzugt bilden diese Elemente dabei senkrecht zueinander verlaufende Zeilen und Spalten. Die Sendeelemente können auch unsymmetrisch angeordnet sein.

Eine weitere Ausführungsform der Erfindung schlägt vor, daß zumindest ein Empfangselement vorgesehen ist, auf dem die Gruppe von Sendeelementen vollständig abgebildet wird. Vorzugsweise ist genau ein derartiges Empfangselement vorgesehen. Die Anzahl der einzelnen Komponenten für die erfindungsgemäße Überwachungseinrichtung ist hierdurch minimal.

Alternativ ist es erfindungsgemäß auch möglich, daß mehrere räumlich voneinander getrennte Empfangselemente vorgesehen sind. Auf diese Weise kann dem Überwachungsbereich grundsätzlich jede beliebige Form verliehen werden. Hierbei kann z. B. auf jedem Empfangselement jeweils lediglich ein Teil der Gruppe von Sendeelementen abgebildet werden. Bevorzugt ist es jedoch, wenn auf jedem Empfangselement alle Sendeelemente abgebildet werden, wodurch eine besonders hohe Überwachungssicherheit erzielt wird. Allgemein können mehrere Sendeelemente gleichzeitig auf mehreren Empfangselementen abgebildet werden.

Gemäß einer weiteren bevorzugten praktischen Ausgestaltung der Erfindung umfaßt der Reflektor eine Spiegeleinheit. In einer besonders einfachen und damit preiswerten Ausgestaltung umfaßt die Spiegeleinheit genau einen Planspiegel.

Der Reflektor kann ferner mehrere Einzelreflektoren umfassen, die vorzugsweise jeweils von einem Planspiegel gebildet sind.

Eine für bestimmte Anwendungen vorteilhafte Überlappung einzelner Teilbereiche des Überwachungsbereiches kann gemäß einer weiteren bevorzugten Ausführungsform der Erfindung dadurch erzielt werden, daß der Reflektor wenigstens zwei gegeneinander verkippte Einzelreflektoren umfaßt.

Gemäß einem weiteren bevorzugten Ausführungsbeispiel der Erfindung ist der Reflektor als Retroreflektor oder Tripelspiegel ausgebildet oder in Form eines z. B. dachkantenförmigen Reflektors vorgesehen, der zumindest bezüglich einer Strahlungsausbreitungsebene als Retroreflektor oder Tripelspiegel wirksam ist. Hierdurch wird der erfindungsgemäßen Überwachungseinrichtung eine vorteilhafte Toleranz gegenüber Ausrichtungsungenauigkeiten verliehen, d.h. es wird die Winkelverfügbarkeit der Überwachungseinrichtung gesteigert, da die einfallende Strahlung unabhängig vom Einfallswinkel parallel zur Einfallsrichtung reflektiert wird.

In einer besonders einfachen Realisierung kann der Reflektor hierbei lediglich zwei rechtwinklig zueinander verlaufende Planspiegel umfassen und insbesondere als sogenannter Dachkanten-Reflektor ausgebildet sein. Eine Reduzierung der Bautiefe bei gleichzeitiger Steigerung der Winkelverfügbarkeit wird gemäß einer alternativen Ausgestaltung der erfindungsgemäßen Überwachungseinrichtung erzielt, wenn der Reflektor eine Vielzahl derartiger Einzel-Reflektoren umfaßt, die nebeneinander angeordnet sind und z.B. jeweils eine langgestreckte Form aufweisen. Bei gleicher Winkelverfügbarkeit läßt sich also durch das Vorsehen einer Mehrzahl von Einzel-Reflektoren, die auch in Form einzelner Retroreflektoren vorgesehen sein können, die Bautiefe des Gesamt-Reflektors in vorteilhafter Weise reduzieren.

Als Sendeelemente sind bevorzugt LEDs vorgesehen, wobei grundsätzlich jede beliebige Strahlungsquelle eingesetzt werden kann. Das bevorzugt flächig ausgebildete Empfangselement des Empfängers ist vorzugsweise eine CCD-, CMOS- oder PSD-Einrichtung (PSD = Position Sensitive Device). Insbesondere bei Verwendung einer CCD-Einrichtung als Empfangselement ist der Sender derart ausgelegt, daß die Sendeelemente synchron betrieben werden. Ein gepulster Betrieb der Sendeelemente ist vorzugsweise für den Fall vorgesehen, daß als Empfangselement eine PSD-Einrichtung verwendet wird. Grundsätzlich kann das Empfangselement beliebig ausgestaltet sein und z. B. einzeilig oder als Empfangsmatrix ausgebildet sein.

Die Lösung der der Erfindung zugrundeliegenden Aufgabe erfolgt zum anderen durch die Merkmale des unabhängigen Verfahrensanspruchs 15.

Bei diesem Verfahren kommt vorzugsweise wenigstens eine erfindungsgemäße optoelektronische Überwachungseinrichtung zum Einsatz.

Weitere bevorzugte Ausführungsformen der Erfindung sind auch in den Unteransprüchen, der Beschreibung sowie der Zeichnung angegeben.

Die Erfindung wird im folgenden beispielhaft unter Bezugnahme auf die Zeichnung beschrieben. Es zeigen:
- Fig. 1: eine schematische Darstellung einer optoelektronischen Überwachungseinrichtung gemäß einer Ausführungsform der Erfindung,
- Fig.2: eine weitere Ausführungsform einer erfindungsgemäßen Überwachungseinrichtung,
- Fig. 3: eine weitere Ausführungsform einer erfindungsgemäßen Überwachungseinrichtung,
- Fig. 4a - 4c: mögliche Ausführungsformen eines Reflektors einer erfindungsgemäßen Überwachungseinrichtung, und
- Fig. 5: eine Ausführungsform einer modular aufgebauten Sende-/Empfangseinrichtung einer erfindungsgemäßen Überwachungseinrichtung.

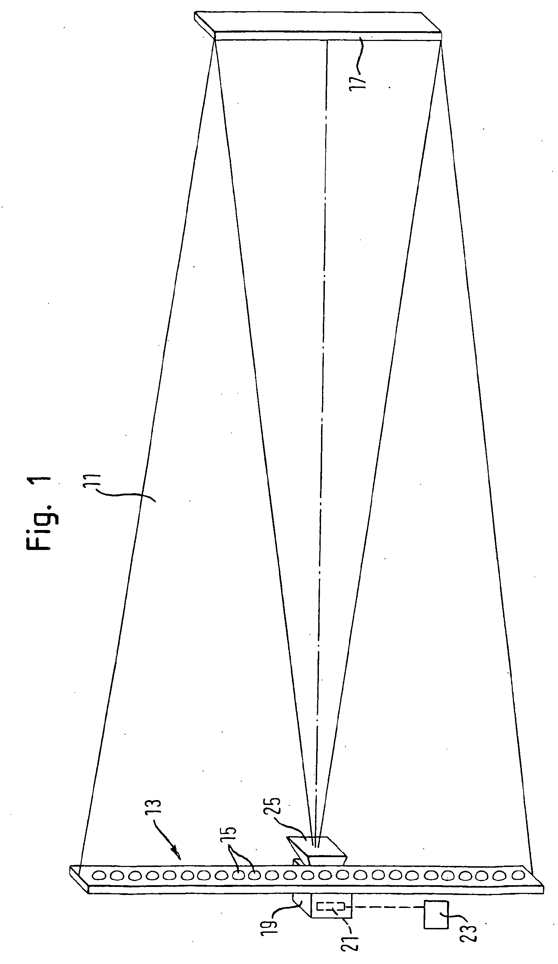

Die in Fig. 1 schematisch dargestellte erfindungsgemäße Überwachungseinrichtung umfaßt auf einer aktiven Seite einen Sender 13, der eine Vielzahl einzelner Sendeelemente 15 aufweist, die jeweils in Form einer LED vorgesehen sind. Grundsätzlich können erfindungsgemäß beliebige Strahlungsquellen als Sendeelemente 15 eingesetzt werden. Die Sendeelemente 15 sind in dieser Ausführungsform einreihig angeordnet. Die Überwachungseinrichtung umfaßt auf ihrer aktiven Seite außerdem einen Empfänger 19, der ein ortsauflösendes Empfangselement 21 aufweist, dem eine Abbildungsoptik 25 vorgelagert ist. Bei dem flächigen Empfangselement 21 handelt es sich bevorzugt um eine CCD-, eine CMOS- oder eine PSD-Einrichtung, wobei - wie vorstehend bereits erwähnt - jede beliebige ein- oder zweidimensionale Konfiguration des Empfangselements 21, d. h. jede Einzeilen- oder Matrixkonfiguration, gewählt werden kann. Die Abbildungs- oder Empfangsoptik 25 umfaßt vorzugsweise ein Mehrlinsensystem kleiner Bauform, wodurch eine gute Punktabbildung mit geringer Verzeichnung bei kleiner Blendenöffnung erzielt wird. Mit dem Empfangselement 21 ist eine Auswerteeinrichtung 23 verbunden, auf die an anderer Stelle näher eingegangen wird.

Ferner umfaßt die erfindungsgemäße Überwachungseinrichtung auf einer passiven Seite einen Reflektor 17, der in der Ausführungsform gemäß Fig. 1 als Planspiegel ausgebildet ist. Die von dem Sender 13 und dem Empfänger 19 gebildete Sende-/Empfangseinheit einerseits und der Spiegel 17 andererseits definieren einen Überwachungs- oder Schutzbereich 11. Die erfindungsgemäße Überwachungseinrichtung dient dazu, das Eindringen von Objekten, beispielsweise Gegenständen oder Personen bzw. Körperteilen von Personen in den Überwachungsbereich 11 oder Manipulationen an der Überwachungseinrichtung nachzuweisen.

Die Form des Überwachungsbereichs 11 ist von den Abmessungen des Senders 13 und des Spiegels 17 abhängig. In der in Fig. 1 dargestellten Ausführungsform ist der Überwachungsbereich 11 trapezförmig. Eine Änderung der Form des Überwachungsbereiches 11 kann z.B. durch Verändern der Abmessungen des Senders 13 und/oder des Spiegels 17 realisiert werden, wobei die Abbildungsoptik 25 entsprechend angepaßt wird, um sicherzustellen, daß die Gruppe von Sendeelementen 15 vollständig abgebildet wird.

Die strahlungsempfindliche Fläche des Empfangselements 21 des in unmittelbarer Nähe zum Sender 13 angeordneten Empfängers 19 ist in dieser Ausführungsform wesentlich kleiner als die von den Sendeelementen 15 des Senders 13 eingenommene Fläche. Die Empfangsoptik 25 ist in Abhängigkeit von der relativen Anordnung des Senders 13 und des Reflektors 17 derart ausgelegt, daß die Gruppe von Sendeelementen 15 vollständig auf dem Empfangselement 21 abgebildet wird.

Wenn der Sender 13, der Reflektor 17 und der Empfänger 19 bestimmungsgemäß relativ zueinander angeordnet und ausgerichtet sind und sich kein oberhalb der Nachweisgrenze der Überwachungseinrichtung liegendes Objekt im Überwachungsbereich 11 befindet, wird von den Sendeelementen 15 auf dem Empfangselement 21 ein Muster erzeugt, das bei einem ordnungsgemäßen Zustand der Überwachungseinrichtung und des Überwachungsbereichs 11 erwartet wird und im folgenden auch als erwartetes Muster oder erwartetes Abbild bezeichnet wird.

Die maximale Auflösung der Überwachungseinrichtung, d.h. die Mindestgröße, ab der in den Überwachungsbereich 11 eindringende Objekte unabhängig davon, wo sie eindringen, sicher nachgewiesen werden, ist von dem Abstand zweier benachbarter Sendeelemente 15 des Senders 13 abhängig. Die tatsächliche Auflösung der Überwachungseinrichtung variiert mit der Lage des in den Überwachungsbereich 11 eindringenden Objektes zwischen dem Sender 13 und dem Reflektor 17.

Objekte oberhalb der Nachweisgrenze haben zur Folge, daß die von einem oder mehreren Sendeelementen 15 ausgesandte Strahlung unterbrochen wird und folglich das oder die betreffenden Sendeelemente 15 nicht auf dem Empfangselement 21 abgebildet werden. Das tatsächlich auf dem Empfangselement 21 erzeugte und nachgewiesene Muster weicht somit von dem erwarteten Muster ab. Diese von einem eindringenden Objekt hervorgerufene Störung kann folglich mittels der Auswerteeinrichtung 23 durch einen Vergleich des tatsächlichen Musters auf dem Empfangselement 21 mit dem erwarteten Muster erkannt werden.

Beispielsweise durch Ausgabe eines Steuersignals kann die Auswerteeinrichtung 23 z.B. die betreffende Maschine, zu deren Überwachung die erfindungsgemäße Einrichtung vorgesehen ist, abschalten und/oder ein Warnsignal erzeugen, wenn eine derartige Störung erkannt wird.

Da das tatsächlich auf dem Empfangselement 21 erzeugte Muster nicht nur davon abhängig ist, ob ein die Nachweisgrenze überschreitendes Objekt in den Überwachungsbereich 11 eindringt oder nicht, sondern auch durch die Geometrie der Überwachungseinrichtung bestimmt ist, haben Manipulationen der Überwachungseinrichtung ebenfalls eine Abweichung von dem erwarteten Muster auf dem Empfangselement 21 zur Folge. So führt beispielsweise eine Verschiebung des Spiegels 17 relativ zum Sender 13 zu einem veränderten Abbild der Sendeelemente 15 auf dem Empfangselement 21. Auch z.B. zu Manipulationszwecken in den Überwachungsbereich 11 eingebrachte zusätzliche Strahlumlenkmittel haben eine Änderung des von den Sendeelementen 15 auf dem Empfangselement 21 gebildeten Musters zur Folge und können daher mittels der Auswerteeinrichtung 23 erkannt werden.

Wenn als Empfangselement 21 eine CCD-Matrix verwendet wird, werden vorzugsweise alle Sendeelemente 15 synchron betrieben. Dies ermöglicht in vorteilhafter Weise einen sogenannten CW-Betrieb mit langen Integrationszeiten. Beim Einsatz einer PSD-Einrichtung als Empfangselement 21 wird der Sender 13 in einem Abtast- oder Scanmodus betrieben, d.h. die Sendeelemente 15 werden gepulst betrieben.

Eine günstige Energiebilanz kann dadurch realisiert werden, daß den Sendeelementen 15 eine Richtcharakteristik verliehen wird. Die emittierte Strahlungsleistung des Senders 13 kann auf diese Weise reduziert werden. Um auch in diesem Fall eine Abbildung aller und insbesondere auch der äußeren Sendeelemente 15 zu gewährleisten, können die Sendeelemente 15 relativ zueinander verkippt und so insbesondere die äußeren Sendeelemente 15 gezielt ausgerichtet werden.

Die Größe des Überwachungsbereichs 11 kann durch Verändern des Abstands zwischen dem Sender 13 und dem Reflektor 17 variiert werden. Diese Reichweitenänderung kann durch Anpassung oder Austausch der Empfangsoptik 25 des Empfängers 19 ausgeglichen werden.

Die Aufbaugeometrie der erfindungsgemäßen Überwachungseinrichtung hat den Vorteil, daß externe, d.h. nicht von den Sendeelementen 15 stammende, Störstrahlung nicht auf diejenigen Bereiche des Empfangselementes 21 gelangen kann, auf denen die von den Sendeelementen 15 emittierte Nutzstrahlung auftrifft.

Wenn das Empfangselement 21 für eine Bildaufnahme geeignet und z.B. in Form einer CCD-Einrichtung vorgesehen ist, können mit der Überwachungseinrichtung außerdem in vorteilhafter Weise Zusatzinformationen aus der Umgebung mit aufgenommen werden.

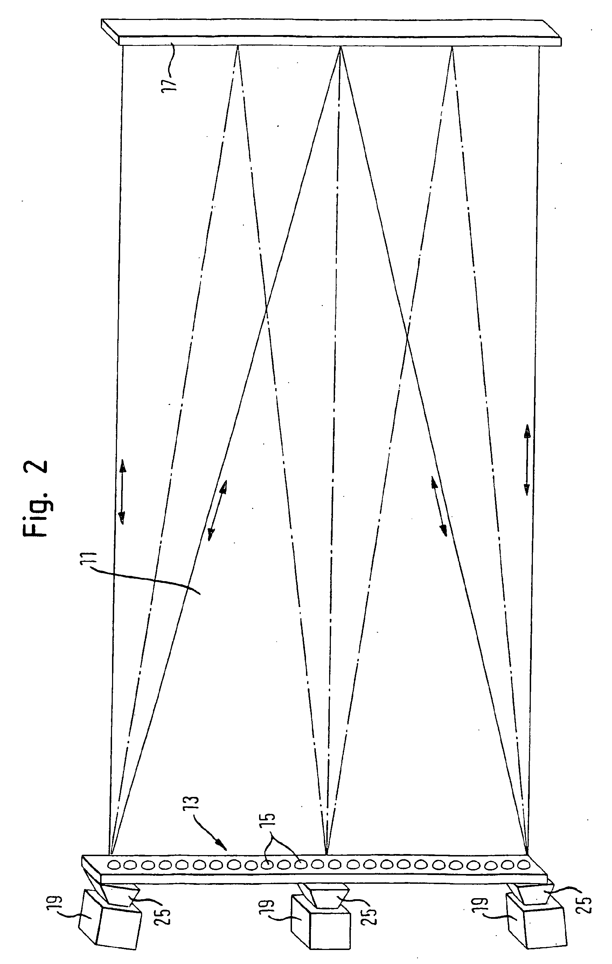

Fig. 2 zeigt eine Variante der erfindungsgemäßen Überwachungseinrichtung, in welcher der Überwachungsbereich 11 eine rechteckige Form aufweist. In dieser Ausführungsform sind zwei Empfänger 19 mit jeweils einem (nicht dargestellten) Empfangselement vorgesehen, die an den äußeren Enden des Senders 13 nach innen geneigt angeordnet sind. Auf jedem Empfangselement werden alle Sendeelemente 15 des Senders 13, d. h. die ganze Gruppe von Sendeelementen 15, abgebildet.

Durch die Verwendung mehrerer Empfänger 19 bzw. Empfangselemente besteht nicht nur die Möglichkeit, die Form des Überwachungsbereichs 11 grundsätzlich beliebig einzustellen, sondern die Empfänger 19 können sich außerdem gegenseitig überwachen, da eine Störung z.B. durch eine nicht autorisierte Verschiebung des Spiegels 17 sich an beiden Empfängern 19 auswirkt. Die Betriebssicherheit wird hierdurch in vorteilhafter Weise erhöht.

Erfindungsgemäß können noch weitere Empfänger 19 vorgesehen sein, wie es in Fig. 2 durch den mittleren, hinsichtlich seiner Anordnung der zentralperspektivischen Anordnung des Empfängers in Fig. 1 entsprechenden Empfänger 19 angedeutet ist. Eine gegenseitige Überwachung der Empfänger 19 erfolgt hierbei dadurch, daß alle Sendeelemente 15 auf mehreren Empfängern 19 gleichzeitig abgebildet werden. Vorzugsweise sind alle Empfänger 19 bzw. Empfangselemente 21 mit einer gemeinsamen Auswerteeinrichtung (nicht dargestellt) verbunden.

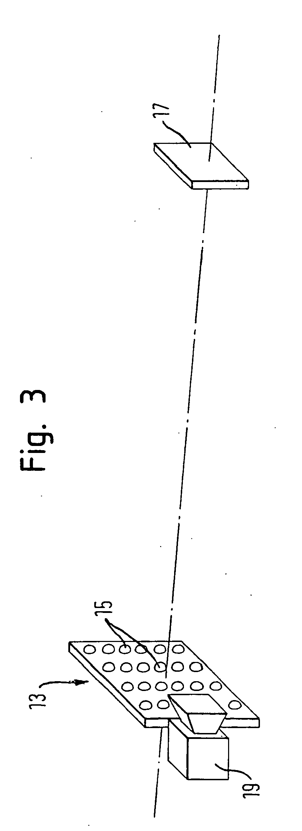

Fig. 3 zeigt eine weitere Variante der Erfindung mit einer zweidimensionalen Anordnung der Sendeelemente 15. Hierdurch läßt sich ein dreidimensionaler Überwachungsbereich realisieren. Der wiederum als Planspiegel ausgebildete Reflektor 17 ist an die in diesem Beispiel rechteckige Form des Senders 13 angepaßt. In der dargestellten Ausführungsform sind die Sendeelemente 15 in senkrecht zueinander verlaufenden Sendezeilen und Sendespalten angeordnet, wobei jedoch erfindungsgemäß grundsätzlich jede beliebige ebene Verteilung der Sendeelemente 15 möglich ist.

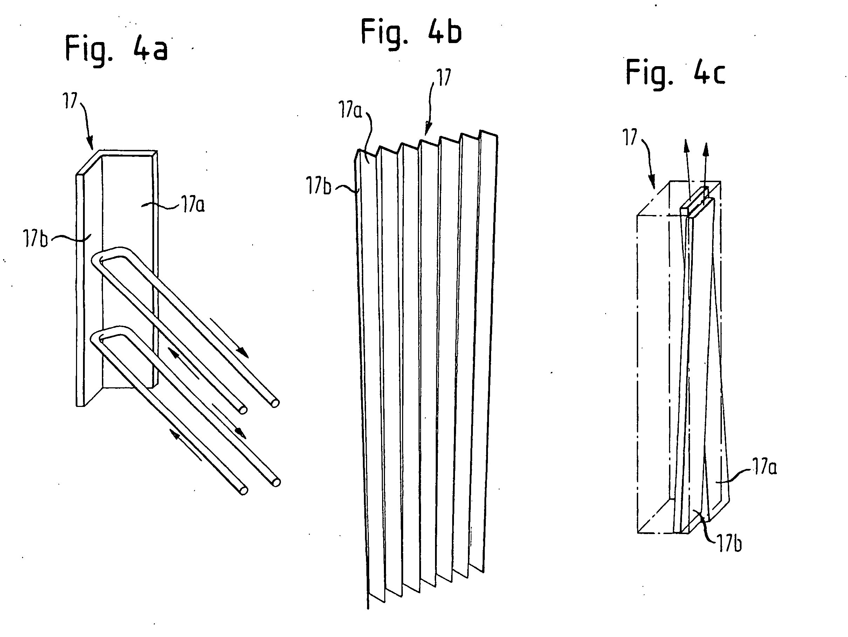

Fig. 4 zeigt mögliche, von der Ausbildung als Planspiegel abweichende Ausgestaltungen des Reflektors 17.

In der Variante gemäß Fig. 4a umfaßt der Reflektor 17 zwei senkrecht zueinander verlaufende Einzelspiegel 17a, 17b, die hierdurch einen Retroreflektor oder Tripelspiegel bilden. Einfallende Strahlen werden unabhängig von ihrem Einfallswinkel parallel zur Einfallsrichtung reflektiert, wie es in Fig. 4a angedeutet ist. Ein derartiger Retroreflektor 17 erhöht die Toleranz gegenüber Fehlausrichtungen und steigert somit die Winkelverfügbarkeit gegenüber einem als Planspiegel ausgebildeten Reflektor.

Eine Steigerung der Winkelverfügbarkeit bei gleichzeitiger Reduzierung der Bautiefe gegenüber der Variante von Fig. 4a wird gemäß der erfindungsgemäßen Ausgestaltung von Fig. 4b dadurch erzielt, daß der Reflektor 17 eine Vielzahl von Einzel-Retroreflektoren 17a, 17 umfaßt, die in dieser Variante jeweils von langgestreckter Form sind. Grundsätzlich kann erfindungsgemäß jede beliebige Anordnung einer Vielzahl von Retroreflektoren zum Einsatz kommen.

In der Variante von Fig. 4c sind zwei nebeneinander angeordnete Planspiegel 17a, 17b vorgesehen, die um eine Achse gegeneinander verkippt sind, wobei die Kippachse senkrecht zu einer Ebene verläuft, die sich senkrecht zu den Spiegelebenen der Spiegel 17a, 17b erstreckt. Durch eine derartige relative Verkippung mehrerer Einzelreflektoren kann der Überwachungsbereich in Teilabschnitte aufgeteilt werden, die einander überlappen.

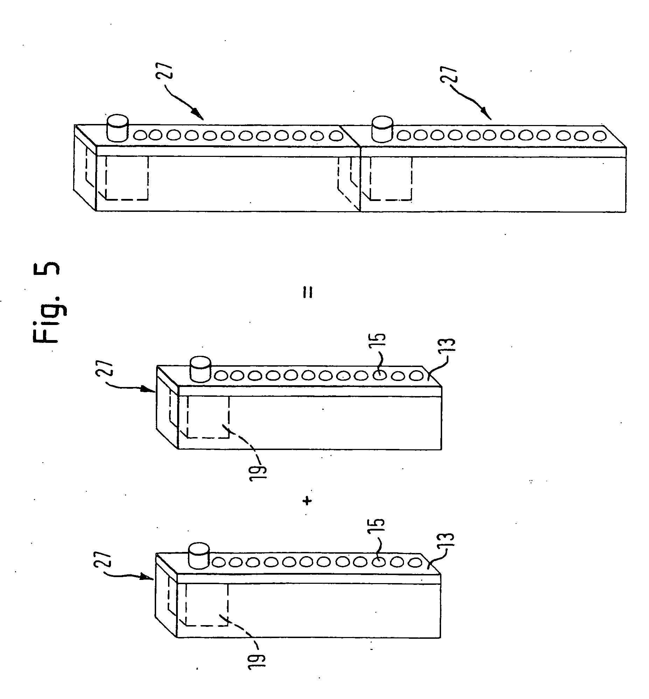

Fig. 5 zeigt eine weitere Ausgestaltung der erfindungsgemäßen Überwachungseinrichtung, bei welcher jeweils ein Sender 13 mit einer einreihigen Anordnung von Sendeelementen 15 und einem in einer Linie mit den Sendeelementen 15 angeordneten Empfänger 19 zu einer Einheit zusammengefaßt ist. Mehrere der auf diese Weise gebildeten Module 27 können auf einfache Weise zu einem Gesamtsystem von prinzipiell beliebiger Größe zusammengesetzt werden, wie es in Fig. 5 schematisch angedeutet ist. Ein derartiges modulares System kann mit denkbar geringem Aufwand gezielt an den jeweiligen Anwendungszweck angepaßt werden.

### Bezugszeichenliste

- 11: Überwachungsbereich, Schutzbereich
- 13: Sender
- 15: Sendeelement
- 17: Reflektor
- 17a, 17b: Einzelreflektor
- 19: Empfänger
- 21: Empfangselement
- 23: Auswerteeinrichtung
- 25: Abbildungsoptik, Empfangsoptik
- 27: Modul

## Patentansprüche

1. Optoelektronische Überwachungseinrichtung zum Nachweisen von in einen Überwachungsbereich (11) eindringenden Objekten mit wenigstens einem an einem Ende des Überwachungsbereichs (11) angeordneten Sender (13), insbesondere einem Lichtgitter, der eine Gruppe von untereinander beabstandeten und jeweils elektromagnetische Strahlung in den Überwachungsbereich (11) aussendenden Sendeelementen (15) aufweist, wobei eine räumliche Anordnung zumindest eines mehrere Sendeelemente umfassenden Teils der Gruppe von Sendeelementen (15) ein Muster bildet, zumindest einem an einem dem Sender (13) gegenüberliegenden Ende des Überwachungsbereichs (11) angeordneten Reflektor (17) für von den Sendeelementen (15) ausgesandte Strahlung, wenigstens einem Empfänger (19), der zumindest ein ortsauflösendes Empfangselement (21) für von dem Reflektor (17) reflektierte Strahlung aufweist, und einer mit dem Empfangselement (21) gekoppelten Auswerteeinrichtung (23),
**dadurch gekennzeichnet, dass**
der Sender (13), der Reflektor (17) und der Empfänger (19) derart ausgebildet und angeordnet sind, dass während des Überwachungsbetriebs zumindest ein mehrere Sendeelemente (15) umfassender Teil der Gruppe von Sendeelementen (15) mittels des Reflektors (17) auf zumindest einem Empfangselement (21) abgebildet wird und mittels der Auswerteeinrichtung (23) überprüfbar ist, ob ein von den abgebildeten Sendeelementen (15) gebildetes Muster auf dem Empfangselement (21) von einem erwarteten Muster der Sendeelemente (15) abweicht, wobei in einem ungestörten Zustand des Überwachungsbereichs (11) alle das Muster bildenden Sendeelemente (15) auf dem Empfangselement (21) abgebildet werden.

2. Einrichtung nach Anspruch 1,
**dadurch gekennzeichnet,**
**daß** der Empfänger (19) im Bereich des Senders (13) und bevorzugt in unmittelbarer Nähe zum Sender (13) angeordnet ist.

3. Einrichtung nach Anspruch 1 oder 2,
**dadurch gekennzeichnet,**
**daß** der Empfänger (19) und der Sender (13) zu einem Modul (27) zusammengefaßt sind.

4. Einrichtung nach einem der vorhergehenden Ansprüche,
**dadurch gekennzeichnet,**
**daß** mehrere jeweils wenigstens einen Sender (13) und zumindest einen Empfänger (19) umfassende Module (27) zu einer Sende-/Empfangseinheit zusammengefaßt sind.

5. Einrichtung nach einem der vorhergehenden Ansprüche,
**dadurch gekennzeichnet,**
**daß** eine einreihige Anordnung von Sendeelementen (15) vorgesehen ist.

6. Einrichtung nach einem der Ansprüche 1 bis 4,
**dadurch gekennzeichnet,**
**daß** eine mehrreihige Anordnung von bevorzugt senkrecht zueinander verlaufende Zeilen und Spalten bildenden Sendeelementen (15) vorgesehen ist.

7. Einrichtung nach einem der vorhergehenden Ansprüche,
**dadurch gekennzeichnet,**
**daß** zumindest ein und bevorzugt genau ein Empfangselement (21) vorgesehen ist, auf dem die Gruppe von Sendeelementen (15) vollständig abgebildet wird.

8. Einrichtung nach einem der Ansprüche 1 bis 6,
**dadurch gekennzeichnet,**
**daß** mehrere räumlich voneinander getrennte Empfangselemente (21) vorgesehen sind, auf denen bevorzugt jeweils die Gruppe von Sendeelementen (15) vollständig abgebildet wird.

9. Einrichtung nach einem der vorhergehenden Ansprüche,
**dadurch gekennzeichnet,**
**daß** der Reflektor eine Spiegeleinheit (17) umfaßt.

10. Einrichtung nach Anspruch 9,
**dadurch gekennzeichnet,**
**daß** die Spiegeleinheit genau einen Planspiegel (17) umfaßt.

11. Einrichtung nach einem der vorhergehenden Ansprüche,
**dadurch gekennzeichnet,**
**daß** der Reflektor (17) mehrere Einzelreflektoren (17a, 17b) umfaßt, die bevorzugt jeweils von einem Planspiegel gebildet sind.

12. Einrichtung nach einem der vorhergehenden Ansprüche,
**dadurch gekennzeichnet,**
**daß** der Reflektor (17) wenigstens zwei gegeneinander verkippte Einzelreflektoren (17a, 17b) umfaßt.

13. Einrichtung nach einem der vorhergehenden Ansprüche,
**dadurch gekennzeichnet,**
**daß** der Reflektor (17) als Retroreflektor oder Tripelspiegel ausgebildet oder zumindest bezüglich einer Strahlungsausbreitungsebene als Retroreflektor oder Tripelspiegel wirksam ist, wobei der Reflektor (17) vorzugsweise wenigstens zwei rechtwinklig zueinander verlaufende Planspiegel (17a, 17b) umfaßt.

14. Einrichtung nach einem der vorhergehenden Ansprüche,
**dadurch gekennzeichnet,**
**daß** der Empfänger (19) eine dem Empfangselement (21) vorgelagerte Abbildungsoptik (25) aufweist.

15. Verfahren zum Nachweisen von in einen Überwachungsbereich (11) eindringenden Objekten, bei dem
- mittels einer Gruppe von an einem Ende des Überwachungsbereichs (11) angeordneten und untereinander beabstandeten Sendeelementen (15) elektromagnetische Strahlung in den Überwachungsbereich (11) ausgesandt wird, wobei eine räumliche Anordnung zumindest eines mehrere Sendeelemente umfassenden Teils der Gruppe von Sendeelementen (15) ein Muster bildet, und
- die von den Sendeelementen (15) ausgesandte Strahlung an einem den Sendeelementen (15) gegenüberliegenden Ende des Überwachungsbereichs (11) derart reflektiert wird, dass zumindest ein mehrere Sendeelemente (15) umfassender Teil der Gruppe von Sendeelementen (15) auf zumindest einem ortsauflösenden Empfangselement (21) abgebildet wird,
**dadurch gekennzeichnet, dass**
überprüft wird, ob ein von den abgebildeten Sendeelementen (15) gebildetes Muster auf dem Empfangselement (21) von einem erwarteten Muster der Sendeelemente (15) zumindest innerhalb vorgebbarer Toleranzgrenzen abweicht, wobei in einem ungestörten Zustand des Überwachungsbereichs (11) alle das Muster bildenden Sendeelemente (15) auf dem Empfangselement (21) abgebildet werden.

16. Verfahren nach Anspruch 15,
**dadurch gekennzeichnet,**
**daß** eine optoelektronische Überwachungseinrichtung mit den Merkmalen zumindest eines der Ansprüche 1 bis 14 verwendet wird.

## Claims

1. An optoelectronic monitoring device for the detection of objects intruding into a monitored zone (11) comprising at least one transmitter (13), in particular a light grid, arranged at an end of the monitored zone (11) and having a group of transmission elements (15) spaced apart from one another and each transmitting electromagnetic radiation into the monitored zone (11), wherein a spatial arrangement of at least one part of the group of transmission elements (15) including a plurality of transmission elements forms a pattern, at least one reflector (17) arranged at an end of the monitored zone (11) opposite the transmitter (13) for radiation transmitted by the transmission elements (15), at least one receiver (19) which has at least one spatially resolving reception element (21) for radiation reflected by the reflector (17), and an evaluation device (23) coupled with the reception element (21),
**characterized in that**
the transmitter (13), the reflector (17) and the receiver (19) are made and arranged such that, during the monitoring operation, at least a part of the group of transmission elements (15) comprising a plurality of transmission elements (15) is imaged on at least one reception element (21) by means of the reflector (17) and a check can be made by means of the evaluation device (23) as to whether a pattern formed on the reception element (21) by the imaged transmission elements (15) differs from an expected pattern of the transmission elements (15), with all the transmission elements (15) forming the pattern beimg imaged on the reception element (21) in a condition of the monitored zone (11) without interference.

2. A device in accordance with claim 1, **characterized in that** the receiver (19) is arranged in the region of the transmitter (13) and preferably in direct proximity to the transmitter (13).

3. A device in accordance with claim 1 or claim 2, **characterized in that** the receiver (19) and the transmitter (13) are combined to form a module (27).

4. A device in accordance with any one of the preceding claims, **characterized in that** a plurality of modules respectively including at least one transmitter (13) and at least one receiver (19) are combined to form one transmission/reception unit.

5. A device in accordance with any one of the preceding claims, **characterized in that** a single row arrangement of transmission elements (15) is provided.

6. A device in accordance with any one of claims 1 to 4, **characterized in that** a multi-row arrangement of transmission elements (15) forming lines and gaps and preferably extending perpendicular to one another is provided.

7. A device in accordance with any one of the preceding claims, **characterized in that** at least one reception element (21), and preferably precisely one reception element, is provided on which the group of transmission elements (15) is completely imaged.

8. A device in accordance with any of claims 1 to 6, **characterized in that** a plurality of reception elements (21) spatially separated from one another are provided, on each of which the group of transmission elements (15) is preferably fully imaged.

9. A device in accordance with any one of the preceding claims, **characterized in that** the reflector includes a mirror unit (17).

10. A device in accordance with claim 9, **characterized in that** the mirror unit includes precisely one plane mirror (17).

11. A device in accordance with any one of the preceding claims, **characterized in that** the reflector (17) includes a plurality of individual reflectors (17a, 17b) which are preferably respectively formed by a plane mirror.

12. A device in accordance with any one of the preceding claims, **characterized in that** the reflector (17) includes at least two individual reflectors (17a, 17b) tilted with respect to one another.

13. A device in accordance with any one of the preceding claims, **characterized in that** the reflector (17) is made as a retro-reflector or as a triple mirror or acts as a retro-reflector or as a triple mirror at least with respect to a beam propagation plane, with the reflector (17) preferably comprising at least two plane mirrors (17a, 17b) extending at right angles to one another.

14. A device in accordance with any one of the preceding claims, **characterized in that** the receiver (19) has an optical imaging system (25) disposed in front of the reception element (21).

15. A method of detecting objects intruding into a monitored zone (11), with which
- electromagnetic radiation is transmitted into the monitored zone (11) by means of a group of transmission elements (15) arranged at an end of the monitored zone (11) and spaced apart from one another, wherein a spatial arrangement of at least one part of the group of transmission elements (15) including a plurality of transmission elements forms a pattern; and
- the radiation transmitted by the transmission elements (15) is reflected at an end of the monitored zone (11) opposite the transmission elements (15) such that at least a part of the group of transmission elements (15) comprising a plurality of transmission elements (15) is imaged on at least one spatially resolving reception element (21),
**characterized in that**
a check is made as to whether a pattern formed on the reception element (21) by the imaged transmission elements (15) differs from an expected pattern of the transmission elements (15) at least within pre-settable tolerance limits, with all the transmission elements (15) forming the pattern beimg imaged on the reception element (21) in a condition of the monitored zone (11) without interference.

16. A method in accordance with claim 15, **characterized in that** an optoelectronic monitoring device is used having the features of at least one of claims 1 to 14.

## Revendications

1. Dispositif de surveillance optoélectronique pour la mise en évidence d'objets pénétrant dans une zone à surveiller (11), comportant au moins un émetteur (13) agencé à une extrémité de la zone à surveiller (11), en particulier un grillage lumineux, qui comprend un groupe d'éléments émetteurs (15) espacés les uns au-dessous des autres et émettant chacun un rayonnement électromagnétique dans la zone à surveiller (11), un agencement dans l'espace d'une partie au moins, comprenant plusieurs éléments émetteurs, du groupe d'éléments émetteurs (15) formant un motif, au moins un réflecteur (17) agencé à une extrémité de la zone à surveiller (11) opposée à l'émetteur et destiné au rayonnement émis par les éléments émetteurs (15), au moins un récepteur (19) qui comprend au moins un élément récepteur (21) à résolution locale pour le rayonnement réfléchi par le réflecteur (17), et un moyen d'évaluation (23) couplé à l'élément récepteur (21),
**caractérisé en ce que**
l'émetteur (13), le réflecteur (17) et le récepteur (19) sont réalisés et agencés de telle sorte que pendant le fonctionnement de surveillance au moins une partie du groupe d'éléments émetteurs (15) comprenant plusieurs éléments émetteurs (15) est imagée sur au moins un élément récepteur (21) au moyen du réflecteur (17), et par l'intermédiaire du moyen d'évaluation (23), il est possible de vérifier si un motif formé par les éléments émetteurs (15) imagés sur l'élément récepteur (21) diffère d'un motif attendu des éléments émetteurs (15), et dans un état non perturbé de la zone à surveiller (11), tous les éléments émetteurs (15) formant le motif sont imagés sur l'élément récepteur (21).

2. Dispositif selon la revendication 1,
**caractérisé en ce que**
le récepteur (19) est agencé dans la zone de l'émetteur (13) et de préférence à proximité directe de l'émetteur (13).

3. Dispositif selon la revendication 1 ou 2,
**caractérisé en ce que**
le récepteur (19) et l'émetteur (13) sont regroupés en un module (27).

4. Dispositif selon l'une des revendications précédentes,
**caractérisé en ce que**
plusieurs modules (27) comprenant chacun au moins un émetteur (13) et au moins un récepteur (19) sont regroupés en une unité d'émission/réception.

5. Dispositif selon l'une des revendications précédentes,
**caractérisé en ce que**
il est prévu un agencement en rangée unique d'éléments émetteurs (15).

6. Dispositif selon l'une des revendications 1 à 4,
**caractérisé en ce que**
il est prévu un agencement en plusieurs rangées d'éléments émetteurs (15) formant des lignes et des colonnes qui s'étendent de préférence perpendiculairement les unes aux autres.

7. Dispositif selon l'une des revendications précédentes,
**caractérisé en ce que**
il est prévu au moins un et de préférence précisément un élément récepteur (21) sur lequel le groupe d'éléments émetteurs (15) est imagé complètement.

8. Dispositif selon l'une des revendications 1 à 6,
**caractérisé en ce que**
il est prévu plusieurs éléments récepteurs (21) séparés dans l'espace les uns des autres, sur lesquels de préférence le groupe respectif d'éléments émetteurs (15) est imagé complètement.

9. Dispositif selon l'une des revendications précédentes,
**caractérisé en ce que**
le réflecteur comprend une unité à miroir (17).

10. Dispositif selon la revendication 9,
**caractérisé en ce que**
l'unité à miroir comprend précisément un miroir plan (17).

11. Dispositif selon l'une des revendications précédentes,
**caractérisé en ce que**
le réflecteur (17) comprend plusieurs réflecteurs individuels (17a, 17b) qui sont formés de préférence chacun par un miroir plan.

12. Dispositif selon l'une des revendications précédentes,
**caractérisé en ce que**
le réflecteur (17) comprend au moins deux réflecteurs individuels (17a, 17b) inclinés l'un par rapport à l'autre.

13. Dispositif selon l'une des revendications précédentes,
**caractérisé en ce que**
le réflecteur (17) est réalisé sous forme de rétroréflecteur ou de miroir triple ou fait office de rétroréflecteur ou de miroir triple par rapport à un plan de propagation de rayonnement, le réflecteur (17) comprenant de préférence au moins deux miroirs plans (17a, 17b) s'étendant à angle droit l'un par rapport à l'autre.

14. Dispositif selon l'une des revendications précédentes,
**caractérisé en ce que**
le récepteur (19) comprend une unité optique d'imagerie (25) agencée en avant de l'élément récepteur (21).

15. Procédé pour la mise en évidence d'objets pénétrant dans une zone à surveiller (11), dans lequel
- on émet un rayonnement électromagnétique dans la zone à surveiller (11) au moyen d'un groupe d'éléments émetteurs (15) agencés à une extrémité de la zone à surveiller (11) et espacés les uns au-dessous des autres, un agencement dans l'espace d'une partie au moins, comprenant plusieurs éléments émetteurs, du groupe d'éléments émetteurs (15) formant un motif, et
- le rayonnement émis par les éléments émetteurs (15) est réfléchi à une extrémité de la zone à surveiller (11) opposée aux éléments émetteurs (15), de telle sorte qu'une partie au moins du groupe d'éléments émetteurs (15), comprenant plusieurs éléments émetteurs (15), est imagée sur au moins un élément récepteur (21) à résolution locale,
**caractérisé en ce que**
l'on vérifie si un motif formé par les éléments émetteurs (15) imagés sur l'élément récepteur (21) diffère d'un motif attendu des éléments émetteurs (15) au moins à l'intérieur de limites de tolérance prédéterminées, et dans un état non perturbé de la zone à surveiller (11), tous les éléments émetteurs (15) formant le motif sont imagés sur l'élément récepteur (21).

16. Procédé selon la revendication 15,
**caractérisé en ce que**
l'on utilise un dispositif optoélectronique de surveillance présentant les caractéristiques de l'une au moins des revendications 1 à 14.
